# EUROPÄISCHE PATENTANMELDUNG

(11) **EP 2 965 668 A1**
(43) Veröffentlichungstag der Anmeldung: **13.01.2016**
(21) Anmeldenummer: 15170927.6
(22) Anmeldetag: 08.06.2015
(51) Int. Cl.: A47F 5/11

(54) **SCHNELL AUFSTELLBARES DISPLAY MIT REGALFÄCHERN**

(30) Priorität: 09.07.2014 DE 102014010131
(71) Anmelder: Panther Packaging GmbH & Co.KG, 25436 Tornesch (DE)
(72) Erfinder: Winkler, Oliver, Tornesch (DE)
(74) Vertreter: Kossak, Sabine

(57) **Zusammenfassung**

Gegenstand der Erfindung ist ein Display aufweisend einen Mantel und mindestens ein Regalfach, wobei der Mantel eine Rückwand und zwei daran angelenkte Seitenwände aufweist und das Regalfach, mindestens einen Regalfachboden und zwei am Regalfachboden angelenkte Befestigungslaschen aufweist und über die Befestigungslaschen mit beiden Seitenwänden verbunden ist. Weiterhin ist Gegenstand der Erfindung ein Verfahren zum Aufstellen eines erfindungsgemäßen Displays. Der Vorteil des erfindungsgemäßen Displays ist es, dass sich das Display in wenigen Sekunden aufstellen lässt, insbesondere auch auf Grund der einteiligen Ausführung. Dieses unterscheidet das Display deutlich von aus dem Stand der Technik bekannten Displays, die mehrteilig gestaltet sind, so dass der Aufbau komplizierter ist oder sie sich nicht flach zusammenfalten lassen, so dass die Transportkosten höher sind.

## Beschreibung

Gegenstand der Erfindung ist ein Display aufweisend einen Mantel und mindestens ein Regalfach, wobei der Mantel eine Rückwand und zwei daran angelenkte Seitenwände aufweist und das Regalfach, mindestens einen Regalfachboden und zwei am Regalfachboden angelenkte Befestigungslaschen aufweist und über die Befestigungslaschen mit beiden Seitenwänden verbunden ist, sowie ein Zuschnitt zur Herstellung des Displays und ein Verfahren zum Aufbau des Displays.

Für die Präsentation von Waren im Handel oder auf Messen werden häufig Displays mit Regalböden eingesetzt. Diese Displays bestehen üblicherweise aus Pappe, Wellpappe, Karton oder Kunststoff und haben daher ein geringes Eigengewicht. Bedingt durch ihre Form sind sie im aufgebauten Zustand jedoch groß und sperrig, so dass sie in diesem Zustand nicht transportiert werden können, da hohe Transportkosten entstehen würden. Üblicherweise werden die Displays deshalb in Einzelteilen flach liegend transportiert und müssen am Ausstellungsort aufgebaut werden. Gleichzeitig müssen die Displays eine ausreichende Stabilität bieten, damit die Waren sicher auf den Regalböden platziert werden können. Um eine ausreichende Stabilität bieten zu können, haben viele Displays einen komplexen Aufbau. Es kommt daher beim Aufbau zu Fehlern, die zu einer Beschädigung des Displays führen, so dass dieses nicht benutzt wird. Bei weniger komplex aufgebauten Displays besteht dafür die Gefahr, dass für die Stabilität relevante Teile beim Aufbau Verknicken oder beschädigt werden, so dass das Display ebenfalls nicht benutzt wird.

Aus der DE 20 2011 003 175 U1 ist ein Displayregal bekannt, dass zwei einander gegenüberliegende Regalseitenwände hat. Zwischen den Seitenwänden erstrecken sich Trägerstangen auf denen die Regalböden platziert werden. Durch die Trägerstangen aus Kunststoff erhalten die Regalböden eine hohe Stabilität und können nicht verbiegen. Die Konstruktion hat jedoch den Nachteil, dass beim Aufbau die Trägerstangen platziert werden müssen und der Aufbau vergleichsweise zeitaufwändig ist.

Ein weiteres Display, das sich schnell und leicht aufbauen lässt ist aus der DE 20 2013 004 981 U1 bekannt. Das Display ist ziehharmonikaartig faltbar und lässt sich daher mit wenigen Handgriffen aufrichten. Aus Stabilitätsgründen enthält das Display jedoch Trennwände, die die Regalböden mittig teilen, um dem Display im aufgerichteten Zustand eine ausreichende Stabilität zu verleihen.

Aufgabe der vorliegenden Erfindung ist es daher ein Display mit Regalfächer zur Aufnahme von Waren bereitzustellen, dass eine hohe Stabilität besitzt, im zusammengefalteten Zustand ein geringes Volumen aufweist und daher leicht und mit geringen Kosten zu transportieren ist und sich einfach, in kurzer Zeit und ohne aufwändige Montageschritte aufbauen lässt. Das Display soll zudem eine ansprechende Präsentation der Waren erlauben.

Die Aufgabe wird erfindungsgemäß gelöst durch ein Display aufweisend einen Mantel und mindestens ein Regalfach, wobei der Mantel eine Rückwand und zwei daran angelenkte Seitenwände aufweist und das Regalfach, mindestens einen Regalfachboden und zwei am Regalfachboden angelenkte Befestigungslaschen aufweist und über die Befestigungslaschen mit beiden Seitenwänden verbunden ist, dadurch gekennzeichnet, dass
- die Befestigungslaschen über eine erste Faltlinie jeweils an einer Seite des Regalfachboden angelenkt sind,
- die Befestigungslaschen jeweils eine zweite Faltlinie aufweisen, die in einem Winkel von 30-60°, bevorzugt 30-50° oder 40-60°, besonders bevorzugt 45°, zur Seite des Regalfachbodens verläuft und die am Mantel angelenkt ist und
- das Display einteilig ist.

Die Aufgabe wird weiterhin erfindungsgemäß gelöst durch ein Display aufweisend einen Mantel und mindestens ein Regalfach, wobei der Mantel eine Rückwand und zwei daran angelenkte Seitenwände aufweist und das Regalfach, mindestens einen Regalfachboden und zwei am Regalfachboden angelenkte Befestigungslaschen aufweist und über die Befestigungslaschen mit beiden Seitenwänden verbunden ist, dadurch gekennzeichnet, dass
- der Mantel mindestens eine Rillung aufweist,
- die Befestigungslaschen über eine erste Faltlinie jeweils an einer Seite des Regalfachboden angelenkt sind,
- die Befestigungslaschen jeweils eine zweite Faltlinie aufweisen, die in einem Winkel von 30-60°, bevorzugt 30-50° oder 40-60°, besonders bevorzugt 45°, zur Seite des Regalfachbodens verläuft und die am Mantel angelenkt ist und
- das Display einteilig ist.

Weitere Ausführungsform sind Gegenstand der Unteransprüche oder nachfolgend beschrieben.

Bei dem erfindungsgemäßen Display handelt es sich bevorzugt um ein Point-of-Sale (POS)-Display. Das Display kann sowohl als Thekendisplay, Bodendisplay oder Palettendisplay verwendet werden. Bei einem Palettendisplay ist die Größe optimaler weise so, dass das aufgebaute Display genau auf eine ¼ - Chep-Palette oder eine ½-Chep-Palette passt.

Der Mantel des erfindungsgemäßen Displays hat bevorzugt eine oder zwei Rillungen, die parallel zur Unterkante des Mantels verlaufen. Die Unterkante des Mantels ist die Kante, auf der das Display steht und die zum Boden weißt. Unter Rillung wird erfindungsgemäß eine Linie verstanden, an der entlang ein Bauteil gefaltet werden kann d.h. das Bauteil ist entlang der Rillung faltbar. Die Rillung ist entweder über ihre gesamte Länge als Faltlinie ausgeführt oder nur teilweise als Faltlinie und teilweise als Schnittlinie ausgeführt. Bei doppelwandigen Bauteilen ist die Rillung bevorzugt in der ersten Wand als Faltlinie und der zweiten Wand teilweise als Schnittlinie ausgeführt. Der Mantel wird entlang der Rillung um 180° gefaltet.

In einer bevorzugten Ausführungsform weist der Mantel zwei Rillungen auf. Für ein POS-Display hat das Display bevorzugt 2 Rillungen.

Die Befestigungslaschen an den Seiten der Regalfächer weisen eine erste Faltlinie und eine zweite Faltlinie auf. Über die erste Faltlinie ist die Befestigungslasche an die Seite des Regalfachbodens angelenkt. Über die zweite Faltlinie, die der ersten gegenüber liegt, ist die Befestigungslasche am Mantel angelenkt. Die zweite Faltlinie verläuft in einem Winkel von 30-60°, bevorzugt 30-50° oder 40-60°, besonders bevorzugt 45°, zur Seite des Regalfachbodens Die zweite Faltlinie kann dabei in einer Ausführung eine Faltlinie zwischen einem Bauteil oder Abschnitts des Mantels und der Befestigungslasche sein.

Bevorzugt weist die Befestigungslasche einen Halteabschnitt und einen Verbindungsabschnitt auf, wobei die zweite Faltlinie die Befestigungslasche in Verbindungsabschnitt und Halteabschnitt trennt und wobei der Verbindungsabschnitt mit der Seitenwand des Mantels verbunden ist und der Halteabschnitt auf der einen Seite am Regalfachboden und der anderen Seite am Verbindungsabschnitt angelenkt ist.

Die horizontale Position der Regalfächer hängt von der Positionierung der Befestigungslasche am Mantel und dem Winkel der zweiten Faltlinie ab. Wenn die 2. Faltlinie z.B. in einem Winkel von 45° zur Seite des Regalfachbodens verläuft, sind die Regalfächer im aufgerichteten Display waagerecht angeordnet. Das Display hat dann von oben betrachtet einen rechteckigen Grundriss. Durch Änderung des Winkels auf einen Winkel von z.B. kleiner als 45° zwischen der 2. Faltlinie und der Seite des Regalfachbodens können die Regalfächer auch leicht schräg nach hinten geneigt sein. Die Regalfächer des Displays können dann als Schütte genutzt werden. Das Display hat auch dann einen rechteckigen Grundriss. Sofern der Winkel z.B. größer als 45° ist und die Regalfächer waagerecht angeordnet sein sollen, erhält das Display einen trapezförmigen Grundriss.

Die Regalfachböden sind bevorzugt rechteckig. Wenn eine hohe Stabilität des Regalfachbodens gewünscht ist, kann dieser doppelwandig und/oder mit Zwischenboden ausgebildet sein. Es ist auch möglich den Regalfachboden trapezförmig zu gestalten oder mit einer ovalen oder kreisförmigen Rundung zur Vorderseite. Auch andere Formen des Regalfachbodens zur Vorderseite des Displays sind möglich.

Die Regalfächer des erfindungsgemäßen Displays sind bevorzugt direkt an den Mantel angelenkt oder besonders bevorzugt mit dem Mantel über die Verbindungsabschnitte fest verbunden, insbesondere verklebt oder durch eine Steckverbindung verbunden. Durch die Form der Befestigungslasche liegen die Regalfächer abhängig von ihrer Größe und dem Abstand zwischen ihnen im zusammengefalteten Zustand schuppenartig übereinander.

Gegenstand der Erfindung ist weiterhin ein Verfahren zum Aufstellen eines erfindungsgemäßen Displays umfassend folgende Schritte.
- bereitstellen eines zusammengefalteten Displays, bei dem die Regalfächer flach auf den Wänden des Mantels aufliegen und ggf. der Mantel entlang der Rillung gefaltet ist, so dass die Regalfächer schuppenartig übereinander liegen,
- Anheben des Mantels, um den Mantel in eine vertikale Position zu bringen, so dass bei einer Rillung der Mantel zunächst entlang der Rillung(en) aufgeklappt, bis mindestens die Rückwand eine ebene Fläche bildet,
- Falten der Seitenwände entlang der Faltlinien zwischen Mantel und Seitenwänden zur Mitte hin, wodurch die Regalfächer nach vorne klappen und
- Fixieren der Seitenwände am Mantel bevorzugt über ein an den Regalfächern und/oder den Seitenwänden angeordnetes Fixierelement.

Das Display lässt sich nur durch Anheben des Mantels aus dem zusammengefalteten in den aufgerichteten Zustand überführen. Im zusammengefalteten Zustand liegen die Regalfächer flach am Mantel. Der Mantel ist ggf. entlang der Rillung(en) gefaltet, so daß bei einer Rillung die Mantelrückseiten aufeinander liegen oder bei zwei oder mehr Rillungen der Mantel ziehharmonikaartig gefaltet ist. Der flachliegende Mantel wird in eine vertikale Position angehoben, wodurch der Mantel zunächst entlang der Rillung(en) aufgeklappt, so dass mindestens die Rückwand und bevorzugt der ganze Mantel eine ebene Fläche bildet. Es werden dann die Seitenwände nach vorne, d.h. aufeinander zu bewegt, wodurch die Regalfächer nach vorn klappen und sich automatisch in ihre Endposition bewegen. Um im aufgestellten Zustand den Mantel und die Regalfächer miteinander zu fixieren, weisen die Regalfächer und/oder die Seitenwände des Mantels bevorzugt mindestens ein Fixierelement auf, mit dem die Halteabschnitt des Regalfachboden mit der Seitenwand des Mantels verbunden werden. Bevorzugt ist das Fixierelement ein Klettverschluss, ein Selbstklebestreifen, ein Plastikelement, ein Magnet, ein Metallverbindungen, eine Einstecklasche, eine umgreifende Lasche oder eine Kombination hiervon ist, wobei das eine Teil des Fixierelements an der Seitenwand und des damit zusammen wirkende Teil des Fixierelement an der Halteabschnitt des Regalfachboden befestigt ist.

In einer bevorzugten Ausführungsform weist der Mantel mindestens ein Rastelement auf, das aus der Mantelfläche ausgestanzt ist, an der Rillung angeordnet ist und im aufgebauten Zustand in einer Ebene mit der Mantelfläche liegt. An der Rillung angeordnet bedeutet, dass die Rillung im Bereich des Rastelements keine Faltlinie aufweist, sondern stattdessen ein über die Faltlinie hinausreichendes Materialstück. Das Rastelement ist bevorzugt aus einer der Seitenwände ausgestanzt. Beim aufrichten des Mantels steht das Rastelement zunächst über die von der Mantelfläche gebildete Ebene hinaus. Sobald das Display vollständig aufgerichtet ist, greift das Rastelement in die dafür vorgesehene Ausnehmung in der Mantelwand und führt dazu, dass der Mantel stabilisiert wird und sich nicht mehr ohne Entfernen des Rastelements entlang der Rillung zusammenfalten lässt. Das Rastelement hat bevorzugt die Form eines Kreisabschnitts, eines Dreiecks, eines Vielecks, eines Ovalabschnitts oder einer Kombination dieser Form. Bevorzugt weist der Mantel auf jeder Seitenwand mindestens ein Rastelement auf, besonders bevorzugt weist der Mantel an jeder Rillung auf jeder Seitenwand ein bis drei Rastelemente auf. Beim Anheben des zusammengefalteten Mantels und Aufklappen der Mantelteilstücke, rasten die Rastelemente in den dafür vorgesehenen Ausstanzungen ein.

In einer Ausführungsform ist mindestens eine Seitenwand des Mantels, bevorzugt beide Seitenwände, doppelwandig ausgebildet. Das Rastelement ist bei einer doppelwandigen Ausbildung der Seitenwand bevorzugt nur aus einer Wand der Doppelwand, besonders bevorzugt der Innenwand ausgestanzt. Diese Ausführungsform hat den Vorteil, dass das Rastelement nicht über die Mantelebene hinaus gedrückt werden kann, sondern durch die zweite Wand der Doppelwand gestützt wird.

Das erfindungsgemäße Display ist einteilig ausgebildet. Einteilig bedeutet, dass Mantel und Regalfächer auch im liegenden, zusammengefalteten Zustand miteinander verbunden sind und nicht erst beim Aufbau aneinander montiert werden. Weiter bevorzugt besteht das Display aus einem Mantel und mindestens einem Regalfachboden. Wenn das Display als POS-Display ausgeführt ist, hat der Mantel bevorzugt eine Höhe von max. 1,60 m über einem einteiligen Display. Das Display weist bevorzugt 2-6, besonders bevorzugt 3-5 Regalfächer auf.

Das Regalfach besteht bevorzugt aus einen einteiligen Zuschnitt. Der Regalfachboden besteht dabei aus mindestens einem Rechteck. In einer Ausführungsform ist der Regalfachboden zweiteilig ausgeführt und besteht aus zwei deckungsgleichen Rechtecken, die auf einander gefaltet werden können. An den Regalfachboden sind über eine erste Faltlinie jeweils an den kurzen Seiten Befestigungslaschen angelenkt. Die Befestigungslaschen bestehen bevorzugt aus einem Halteabschnitt und einem Verbindungsabschnitt. Der Halteabschnitt ist über eine zweite Faltlinie an den Verbindungsabschnitt angelenkt.

Der Mantel weist in einer bevorzugten Ausführungsform drei Zuschnittteile auf. Ein erstes rechteckiges Zuschnittteil bildet die Rückwand des Mantels, während zwei weitere rechteckige Zuschnittteile die Seitenwände bilden. Die Seitenwände können doppelwandig ausgeführt sein. Alle drei Zuschnittteile weisen mindestens eine Rillung auf, die parrallel zur kürzeren Seitenkante verläuft, bevorzugt zwei Rillungen. Die Zuschnittteile werden so miteinander verbunden, dass die Rillung in den Seitenwänden und der Rückwand jeweils auf der gleichen Höhe befindlich ist. In den Seitenwänden ist jeweils ein Rastelement an der Rillung angeordnet.

In der Ausführungsform als POS-Display sind die Abmessungen des Displays im zusammengefalteten Zustand so, dass genau ein Palettenmaß einer Europalette eingehalten wird, bzw. die Gurtmaße für die Kuriere eingehalten sind. Hierdurch ist ein besonders leichter Versand, sowohl in einem Umkarton als auch ohne Umkarton möglich. Die Transportkosten können dadurch gering gehalten werden und es ist möglich eine Vielzahl von Displays gleichzeitig zu versenden, da sich diese sehr flach und schmal zusammenlegen lassen.

Das erfindungsgemäße Display zeichnet sich besonders dadurch aus, dass es ohne zusätzliches Werkzeug in sehr kurzer Zeit aus dem zusammengefalteten Zustand aufgerichtet werden kann. Die leichte Aufstellbarkeit wird besonders durch die Rillungen im Mantel und die Faltlinie in der Befestigungslasche der Regalfächer bedingt. Eine besonders hohe Stabilität wird erreicht, wenn zusätzlich die Rastelemente vorhanden sind, die für eine sichere Verrastung des Mantels und einen sicheren Halt sorgen.

Der Vorteil des erfindungsgemäßen Display ist es, das sich das Display in wenigen Sekunden aufstellen lässt, insbesondere auch auf Grund der einteiligen Ausführung. Dieses unterscheidet das Display deutlich von aus dem Stand der Technik bekannten Displays, die mehrteilig gestaltet sind, so dass der Aufbau komplizierter ist oder sie sich nicht flach zusammenfalten lassen, so dass die Transportkosten höher sind.

Das erfindungsgemäße Display kann aus allen papierbasierten Materialien wie Pappe, Wellpappe, Karton oder Papier bestehen. Es kann aber auch aus Kunststoffen oder Holz bestehen. Ebenso sind Mischungen dieser Materialien, auch Mischung aus Kunststoff und papierbasierten Materialien möglich. Bevorzugt besteht das Display aus Wellpappe, Pappe oder Karton. Das erfindungsgemäße Display kann zusätzlich bedruckt, beklebt, mit Folie kaschiert oder auf andere übliche Weise dekoriert sein.

Wenn das erfindungsgemäße Display aus Wellpappe, Pappe oder Karton besteht haben die Seitenwände und die Rückwand des Mantels bevorzugt eine Materialstärke von 5 mm bis zu 1 cm. Dieses führt zu einer besonders hohen Stabilität und ermöglicht eine besonders einfache Ausführung der Rastelemente.

Das erfindungsgemäße Display kann in einer Ausführungsform ein Topschild aufweist, das mit der Rückwand und/oder der Seitenwand des Mantels verbunden ist. Das Topschild wird z.B. in Schlitze, die sich an der Oberkante der Rückwand befinden, gesteckt. Das Topschild kann auch Teil des Zuschnitts des Mantels sein. In einer weiteren Ausführungsform weist das erfindungsgemäße Display zudem ein Sockelelement auf. Das Sockelelement ist ebenfalls über Verbindungslaschen mit dem Mantel verbunden und wird beim aufrichten aus dem flach liegenden Zustand aufgeklappt.

Die Erfindung wird anhand der Figuren näher erläutert. Es zeigen
- Figur 1: ein erfindungsgemäßes Display im aufgerichteten Zustand,
- Figur 2: das erfindungsgemäße Display aus Figur 1 nach dem Aufklappen des Mantels,
- Figur 3: das erfindungsgemäße Display aus Figur 2 mit aufgerichteter Rückwand des Mantels,
- Figur 4: das Display aus Figur 1 mit transparenten Seitenwänden,
- Figur 5a: einen Zuschnitt für ein Regalfach und
- Fig 5b: einen Zuschnitt für einen Mantel des erfindungsgemäßen Displays.

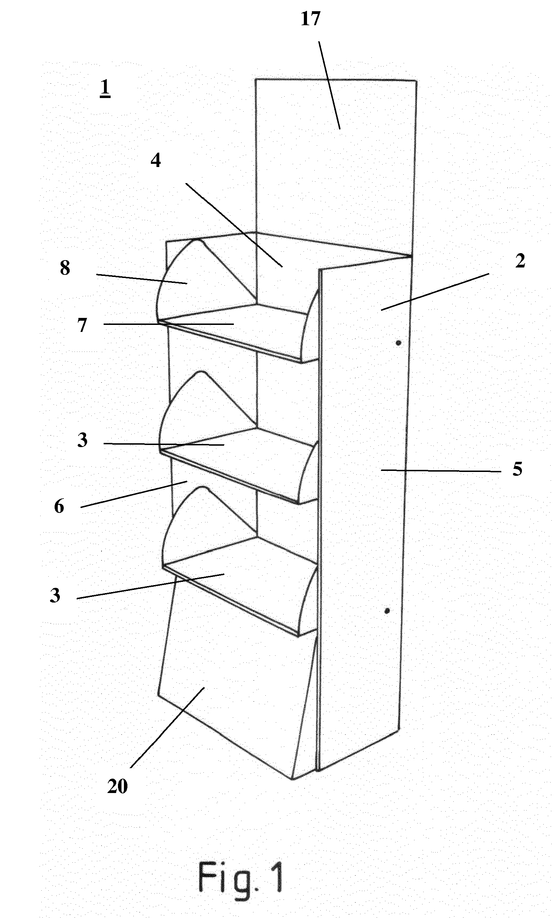

Figur 1 zeigt ein erfindungsgemäßes Display 1 im aufgerichteten Zustand. Der Mantel 2 weist eine Rückwand 4, eine rechte Seitenwand 5 und eine linke Seitenwand 6 auf. Zwischen den Seitenwänden 5,6 sind drei Regalfächer 3 angeordnet. Die Regalfächer 3 weisen jeweils einen Regalfachboden 7 und zwei Befestigungslaschen 8 auf. Das Display 1 ist im unteren Bereich mit einem Sockel 20 versehen. An der Rückwand 4 ist ein Topschild 17 befestigt.

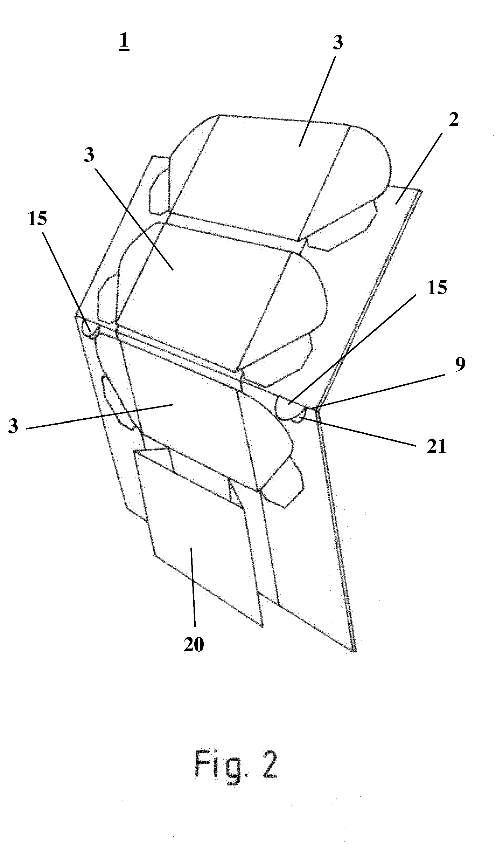

Figur 2 zeigt das erfindungsgemäße Display 1 aus Figur 1 während dem ersten Aufbauschritt, bei dem die Rückwand 4 des Mantels 2 entlang der Rillung 9 aufgeklappt wird. An der Rillung 9 sind die Rastelemente 15 erkennbar, die hier noch frei in den Raum stehen und noch nicht in die Ausstanzungen 21 eingreifen. Die Regalfächer 3 liegen noch flach auf dem Mantel 2 auf. Der Sockel 20 ist bereits teilweise aufgeklappt. Es ist erkennbar, dass die Regalfächer 3 schuppenartig übereinander angeordnet sind, auch wenn sie bei der vorliegenden Ausführung nicht überlappen.

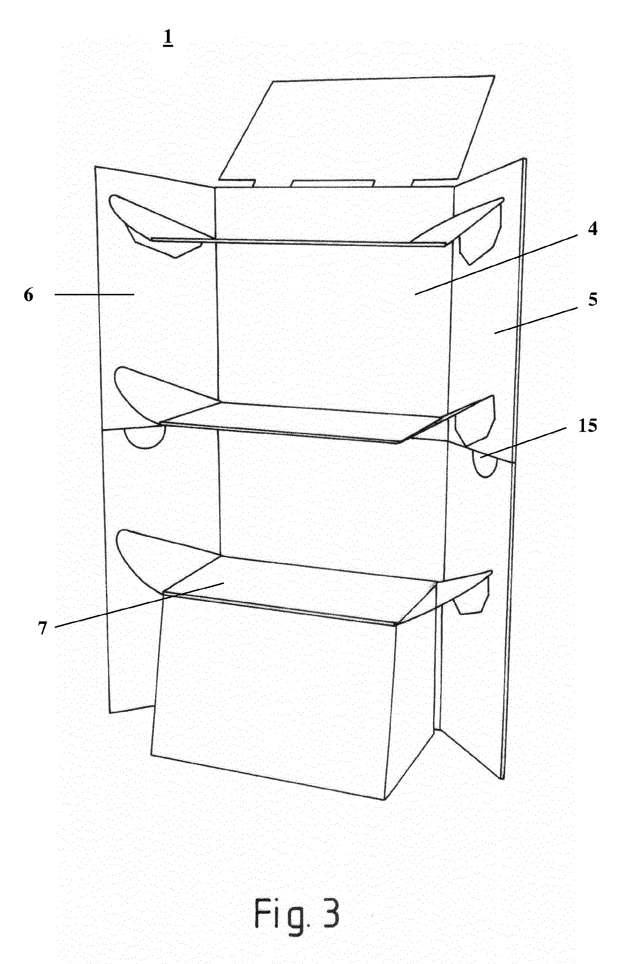

Figur 3 zeigt das erfindungsgemäße Display 1 aus Figur 2 beim nächsten Aufbauschritt. Die Rückwand 4 ist vollständig aufgerichtet und bildet eine Ebene. Die Rastelemente 15 sind in den dafür vorgesehenen Ausstanzungen eingerastet. Die Seitenwände 5 und 6 sind bereits aus der Ebene mit der Rückwand heraus nach vorne zum Betrachter gefaltet, so dass sich die Regalfachböden 7 durch die Verbindung mit dem Befestigungslaschen 8 aus der vertikalen in die horizontale Lage verschieben. Das Topschild 17 ist teilweise aufgerichtet.

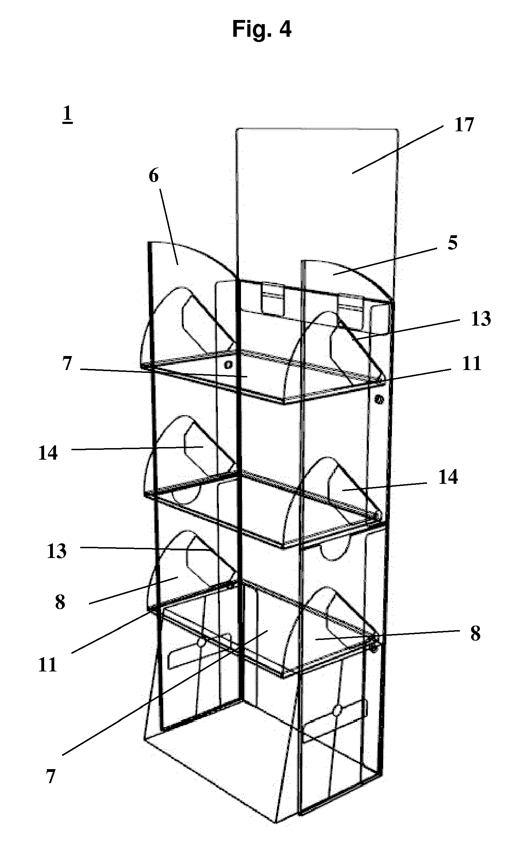

Figur 4 zeigt das erfindungsgemäße Display 1 aus Figur 3 im vollständig aufgerichteten Zustand. Die Regalfachböden 7 befinden sich in einer horizontalen Position. Die Befestigungslaschen 8 liegen an den Seitenwänden 5 und 6 des Mantels an. Dabei ist der Verbindungsabschnitt 14 mit dem Mantel verklebt. Die Befestigungslaschen 8 sind entlang der ersten Faltlinie 11 und der zweiten Faltlinie 13 gefaltet, so dass der Halteabschnitt 12 eine Verbindung zwischen Regalfachboden 7 und Verbindungsabschnitt 14 bzw. Mantel 2 bildet.

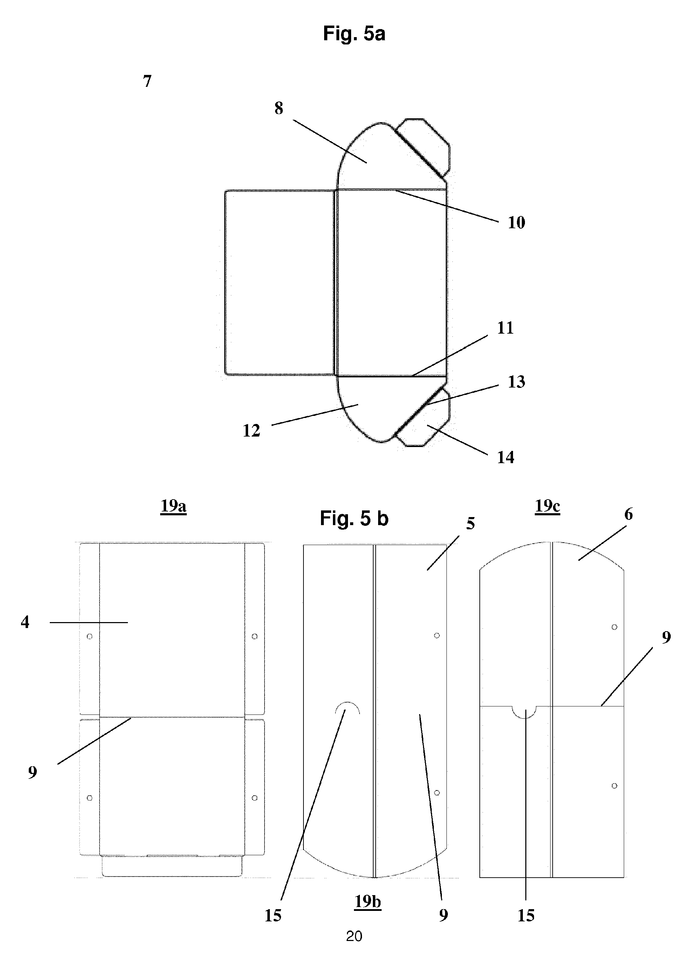

Figur 5a zeigt den Zuschnitt 18 für ein Regalfach 3. Der Regalfachboden 7 ist zweiteilig ausgeführt und besteht aus zwei Rechtecken, die auf einander gefaltet werden können. An den Regalfachboden 7 sind jeweils an den kurzen Seiten 10 Befestigungslaschen 8 über eine erste Faltlinie 11 angelenkt. Die Befestigungslaschen 8 bestehen aus einem Halteabschnitt 12 und einem Verbindungsabschnitt 14. Der Halteabschnitt 12 ist über eine zweite Faltlinie 13 an den Verbindungsabschnitt 14 angelenkt.

Figur 5b zeigt die drei Zuschnittteile 19a, b, c für den Mantel 2. Zuschnitt Teil 19 a bildet die Rückwand 4 des Mantels, während die Zuschnittteile 19 b und 19 c die Seitenwände 5 und 6 bilden, die hier doppelwandig ausgeführt sind. In den Seitenwänden 5 und 6 ist jeweils ein Rastelement 15 angeordnet. Alle drei Zuschnittteile 19 a, b, c weisen eine Rillung 9 auf. Die Zuschnittteile werden so miteinander verbunden, dass die Rillung in den Seitenwänden und der Rückwand jeweils auf der gleichen Höhe befindlich ist.

### Bezugszeichenliste

- Display: 1
- Mantel: 2
- Regalfach: 3
- Rückwand: 4
- Seitenwand: 5
- Seitenwand: 6
- Regalfachboden: 7
- Befestigungslasche: 8
- Rillung: 9
- Seite des Regalfachbodens: 10
- erste Faltlinie: 11
- Halteabschnitt: 12
- zweite Faltlinie: 13
- Verbindungsabschnitt: 14
- Rastelement: 15
- Fixierelement: 16
- Topschild: 17
- Zuschnitt Regalfach: 18
- Zuschnitt Mantel: 19
- Sockel: 20
- Ausstanzungen: 21

## Patentansprüche

1. Display (1) aufweisend einen Mantel (2) und mindestens ein Regalfach (3), wobei der Mantel (2) eine Rückwand (4) und zwei daran angelenkte Seitenwände (5, 6) aufweist und das Regalfach (3), mindestens einen Regalfachboden (7) und zwei am Regalfachboden (7) angelenkte Befestigungslaschen (8) aufweist und über die Befestigungslaschen (8) mit beiden Seitenwänden (5,6) verbunden ist, **dadurch gekennzeichnet, dass**
• die Befestigungslaschen (8) über eine erste Faltlinie (11) jeweils an einer Seite (10) des Regalfachboden (7) angelenkt sind,
• die Befestigungslaschen (8) jeweils eine zweite Faltlinie (11) aufweisen, die in einem Winkel von 30-60° zur Seite (10) des Regalfachbodens (7) verläuft und die am Mantel angelenkt ist und
• das Display einteilig ist.

2. Display (1) aufweisend einen Mantel (2) und mindestens ein Regalfach (3), wobei der Mantel (2) eine Rückwand (4) und zwei daran angelenkte Seitenwände (5, 6) aufweist und das Regalfach (3), mindestens einen Regalfachboden (7) und zwei am Regalfachboden (7) angelenkte Befestigungslaschen (8) aufweist und über die Befestigungslaschen (8) mit beiden Seitenwänden (5,6) verbunden ist, **dadurch gekennzeichnet, dass**
• der Mantel (2) mindestens eine Rillung (9) aufweist,
• die Befestigungslaschen (8) über eine erste Faltlinie (11) jeweils an einer Seite (10) des Regalfachboden (7) angelenkt sind,
• die Befestigungslaschen (8) jeweils eine zweite Faltlinie (13) aufweisen, die in einem Winkel von 30-60° zur Seite (10) des Regalfachbodens (7) verläuft und die am Mantel angelenkt ist und
• und das Display einteilig ist.

3. Display (1) gemäß Anspruch 1 oder 2, **dadurch gekennzeichnet, dass** die Befestigungslasche (8) einen Halteabschnitt (12) und einen Verbindungsabschnitt (14) aufweist, wobei die zweite Faltlinie (13) die Befestigungslasche (8) in Verbindungsabschnitt (14) und Halteabschnitt (12) trennt und wobei der Verbindungsabschnitt (14) mit der Seitenwand (5,6) des Mantels verbunden ist und der Halteabschnitt (12) auf der einen Seite am Regalfachboden (7) und der anderen Seite am Verbindungsabschnitt (14) angelenkt ist.

4. Display (1) gemäß einem der vorhergehenden Ansprüche, **dadurch gekennzeichnet, dass** der Mantel (2) eine oder zwei Rillungen hat, die parallel zur Unterkante des Mantels verlaufen.

5. Display (1) gemäß einem der vorhergehenden Ansprüche, **dadurch gekennzeichnet, dass** der Mantel (2) mindestens ein Rastelement (15) aufweist, dass aus der Mantelfläche ausgestanzt ist, an der Rillung (9) angeordnet ist und im aufgebauten Zustand einer Ebene mit der Mantelfläche liegt.

6. Display (1) gemäß einem der vorhergehenden Ansprüche, **dadurch gekennzeichnet, dass** das Rastelement (15) die Form eines Kreisabschnitts, eines Dreiecks, eines Vielecks, eines Ovalabschnitts oder einer Kombination dieser Form hat.

7. Display (1) gemäß Anspruch 5, **dadurch gekennzeichnet, dass** mindestens eine Seitenwand (5,6) des Mantels, bevorzugt beide Seitenwände, doppelwandig ausgebildet sind und das Rastelement (15) nur aus einer Wand der Doppelwand, bevorzugt der Innenwand ausgestanzt ist.

8. Display (1) gemäß einem der vorhergehenden Ansprüche, **dadurch gekennzeichnet, dass** die Regalfächer (3) mit dem Mantel (2) über die Verbindungsabschnitt (14) fest verbunden, bevorzugt verklebt sind.

9. Display (1) gemäß einem der vorhergehenden Ansprüche, **dadurch gekennzeichnet, dass** die Regalfächer (3) mindestens ein Fixierelement (16) aufweisen, mit dem die Halteabschnitt (12) der Regalfächer mit der Seitenwand (5,6) des Mantels verbunden wird, wobei das Fixierelement bevorzugt ein Klettverschluss, ein Selbstklebestreifen, ein Plastikelement, ein Magnet, ein Metallverbindungen, eine Einstecklasche, eine umgreifende Lasche oder eine Kombination hiervon ist.

10. Display (1) gemäß einem der vorhergehenden Ansprüche, **dadurch gekennzeichnet, dass** das Display (1) aus Pappe, Wellpappe, Karton, Holz, Papier oder einer Mischung dieser Materialien besteht, bevorzugt aus Wellpappe, Pappe oder Karton.

11. Display (1) gemäß an der vorhergehenden Ansprüche, **dadurch gekennzeichnet, dass** das Display (1) aus einem Mantel (2) und mindestens einem Regalfach (3) besteht.

12. Display (1) gemäß einem der vorhergehenden Ansprüche, **dadurch gekennzeichnet, dass** das Display (1) eine Topschild (17) aufweist, dass mit der Rückwand (4) des Mantels verbunden ist.

13. Verfahren zum Aufstellen eines Displays gemäß einem der Ansprüche 1 bis 12 umfassend folgende Schritte.
- bereitstellen eines zusammengefalteten Displays, bei dem die Regalfächer flach auf den Wänden des Mantels aufliegen und ggf. der Mantel entlang der Rillung gefaltet ist, so dass die Regalfächer schuppenartig übereinander liegen,
- Anheben des Mantels, um den Mantel in eine vertikale Position zu bringen, so dass bei einer Rillung der Mantel zunächst entlang der Rillung(en) aufgeklappt, bis er eine ebene Fläche bildet,
- Falten der Seitenwände entlang der Faltlinien zwischen, Mantel und Seitenwänden zur Mitte hin, wodurch die Regalfächer nach vorn klappen und
- Fixieren der Seitenwände am Mantel bevorzugt über ein an den Regalfächer Regalfächer und/oder die Seitenwände angeordnetes Fixierelement.
